(19) **Europäisches Patentamt / European Patent Office / Office européen des brevets**

(11) **EP 4 614 916 A1**

(12) # EUROPEAN PATENT APPLICATION

(43) Date of publication:
**10.09.2025 Bulletin 2025/37**

(21) Application number: **25156936.4**

(22) Date of filing: **10.02.2025**

(51) International Patent Classification (IPC):
*H04L 41/0631* (2022.01)    *H04L 41/069* (2022.01)
*H04L 41/0893* (2022.01)    *H04L 41/14* (2022.01)
*H04L 43/04* (2022.01)    *H04L 43/08* (2022.01)
*H04L 41/16* (2022.01)    *H04L 43/16* (2022.01)

(52) Cooperative Patent Classification (CPC):
**H04L 41/0631; H04L 41/065; H04L 41/069;
H04L 41/0893; H04L 41/14; H04L 43/04;
H04L 43/08;** H04L 41/0636; H04L 41/16;
H04L 43/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.02.2024 US 202463558401 P**

(71) Applicant: **EXFO Solutions SAS**
**35136 Saint-Jacques-de-la-Lande (FR)**

(72) Inventors:
- **PELLOIN, Fabrice**
 **35136 SAINT JACQUES DE LA LANDE (FR)**
- **LAGAIN, Stephane**
 **35136 SAINT JACQUES DE LA LANDE (FR)**

(74) Representative: **Lavoix**
**62, rue de Bonnel**
**69448 Lyon Cedex 03 (FR)**

(54) **AUTOMATIZED MONITORING OF ANOMALIES DURING OPERATION OF A NETWORK USING TAGGING OF GROUPS OF CORRELATED ANOMALIES**

(57)    The invention concerns a method and system for automatized monitoring of anomalies during operation of a network, the method comprising:
- receiving (70) real-time network data describing operation of the network,
- processing (72) the received real-time network data to detect anomalies, and postprocessing anomalies to compute groups of correlated anomalies,
the method further comprising :
- configuring (74) tags relating to anomalies, each tag belonging to a tag category and having an associated identifier, an associated label, a condition field allowing to define one or several associated condition(s),
- assigning (76) tags among the previously configured tags to groups of correlated anomalies, comprising automatic assigning of conditional tags if the associated condition or conditions is validated for said groups of correlated anomalies. Optionally, for each group of correlated anomalies tagged with a tag having at least one associated action, the at least one action is applied.

FIG.5

**Description**

FIELD OF THE INVENTION

The present invention generally relates to network monitoring. More particularly, the present disclosure relates to systems and methods for automatized monitoring of anomalies during operation of a network, in particular a wireless telecommunications network.

BACKGROUND OF THE INVENTION

Monitoring the operation of communication networks, in particular for mobile telecommunications, is a constant concern of network operators. Indeed, it is critical to detect any anomalies in the network operation and to apply corrective measures, in order to maintain the customer satisfaction.

Various management and monitoring systems produce a large amount of real-time data, which cannot be comprehended and efficiently processed by the users (e.g. operators, technicians). In particular, the monitoring systems gather real-time data, which may include telemetry data, alarms, warnings, performance monitoring, data from passive or active probes etc., and it is possible to detect time lasting events, such as anomalies in the operation of the communication network. An important challenge is to simplify the investigation, prioritize the events and utilize the resources effectively. When receiving large amounts of information, such a challenge is difficult to achieve even for very skilled operators, and it is desirable to provide automated tools to help the operators.

In particular, it is desirable to provide automated anomaly detection, in order to help operators with monitoring network operation and maintenance.

Given the complexity of communication networks, the ready-to-use machine learning algorithms are not sufficient for this task.

Several methods and systems for improving automation of anomaly detection and processing were proposed.

Patent application US 2023/0188440 A1 describes a method for automatic classification of correlated anomalies though an interpretable clustering.

Patent US 11,416,504 B2 proposes systems and methods for detection, characterization, and prediction of real-time events having approximate periodicity including detection of events from raw data that are approximately periodic.

Patent US 11,522,766 B2 describes a method for determining the root cause diagnosis of groups of correlated anomalies, from rule based parsing on distributions of data related to said anomalies.

An aim of the present invention is to improve automation of anomaly monitoring using tagging of groups of correlated anomalies, and also to provide advanced reconfiguration of anomaly detection, while providing a user or operator with easy to use and comprehensible tools.

BRIEF SUMMARY OF THE INVENTION

This and other objects are achieved by a method for automatized monitoring of anomalies during operation of a network, the method comprising:

- receiving real-time network data describing operation of the network,
- processing the received real-time network data to detect anomalies, and post-processing anomalies to compute groups of correlated anomalies,

the method further comprising :

- configuring tags relating to anomalies, each tag belonging to a tag category and having an associated identifier, an associated label, a condition field allowing to define one or several associated condition(s),
- assigning tags among the previously configured tags to groups of correlated anomalies, comprising automatic assigning of conditional tags if the associated condition or conditions is validated for said groups of correlated anomalies.

In embodiments of the invention, the method for automatized monitoring of anomalies during operation of a network according to the invention comprises one or more of the following features, considered alone or according to all technically possible combinations.

Each tag further comprises an action field allowing to define at least one action to be carried out automatically, the method comprising, for each group of correlated anomalies tagged with a tag having at least one associated action, applying the at least one action.

At least some of the tags are non-conditional tags, the method further comprising, for at least one non-conditional tag, supervised automatic learning of a prediction model to predict the non-conditional tag, the prediction model being a classification decision tree trained by a tree-learning on a learning set of network data representative of groups of correlated anomalies tagged with said non-conditional tag.

The non-conditional tag is a user-defined tag, and the learning set is obtained from network data initially labelled with said user-defined tag assignment.

The method comprises automatic clustering applied on incoming network data to obtain clusters of groups of correlated anomalies, each cluster forming a learning set for an associated tag category.

The tags categories comprise system-related categories, each system-related tag being either associated with backend system function(s) or having an associated condition, and the method comprises automatically assigning the system-related tags.

The system-related tags comprise a "data source unavailability" tag indicating whether a source of network data relating to a monitored metric of a group of correlated anomalies is cut-off.

The system-related tags comprise an "external event" tag relative to a planned external event, said external event tag comprising conditions with rules related to one or several network dimensions related to the planned external event.

The system-related tags comprise a conditional tag identifying weak results, said weak result tag being assigned based on conditions verified on anomaly detection, an anomaly associated to a rule being detected on a comparison between a smoothed signal and an anomaly threshold signal, weak result conditions including a maximal deviation percentage between smoothed signal and anomaly threshold being lower than a predetermined percentage of the anomaly threshold value.

The weak result conditions further include at least one of anomaly duration lower than a nominal duration, no periodicity detected, no single root-cause diagnosis attached.

The method further comprises computations of statistics per rule of anomaly detection on predefined observation periods, and selecting rules having a number of anomalies higher than a first threshold, with a ratio of anomalies having a tag weak result higher than a second threshold, and further applying reconfiguration of anomaly detection for selected rules.

The reconfiguration comprises computing, for an observation period and for a given anomaly rule, from signals associated to anomalies tagged as weak results, reconfigured values of parameters used for determining the anomaly threshold.

The reconfiguration further comprises applying said reconfigured values of parameters to groups of anomalies which are not tagged as weak results, and computing an accuracy estimate of the reconfigured values of parameters based on statistics on detected anomalies computed before and after applying said reconfigured values of parameters.

The method further comprises applying the reconfigured values of parameters used for determining the anomaly threshold computed on a following observation period if the accuracy estimate is higher than an accuracy threshold.

The network data includes one or several metrics and dimension linked to said group of correlated anomalies, among group duration, group impacted subscribers, severity, user flags, number of anomalies contained in group, root cause diagnosis, presence of approximate periodicities, nature of rules linked to anomalies, nature of root cause diagnosis elements targeted, nature of root cause diagnosis 3GPP cause and geographic data linked to dimensions.

The processing comprises filtering groups of anomalies based on associated tags, automatically analyzing anomalies, triggering automatically exports or advanced statistics computation or group deletion or automatically reconfiguring anomaly detection.

According to another aspect, the invention concerns a system for automatized monitoring of anomalies during operation of a network, comprising:

- a receptor module receiving real-time network data describing operation of the network,
- a processing module processing the received real-time network data to detect anomalies, and post-processing anomalies to compute groups of correlated anomalies, the system further comprising :
- a configuring module for configuring tags relating to anomalies, each tag belonging to a tag category and having an associated identifier, an associated label, a condition field allowing to define one or several associated condition(s),
- an assigning module for assigning tags among the previously configured tags to groups of correlated anomalies, comprising automatic assigning of conditional tags if the associated condition or conditions is validated for said groups of correlated anomalies.

The system for automatized monitoring of anomalies during operation of a network implements the method for automatized monitoring of anomalies during operation of a network as briefly described above, according to all variants and examples.

According to another aspect, the invention concerns a computer program product comprising software instructions, which, when implemented by a programmable device, implement a method for automatized monitoring of anomalies during operation of a network as briefly described above.

According to another aspect, the invention concerns a non-transitory computer-readable medium having instructions stored thereon for programming at least one processor to perform the method for automatized monitoring of anomalies during operation of a network as briefly described above.

BRIEF DESCRIPTION OF THE DRAWINGS

Further characteristics and advantages of the present invention will become apparent from the following description, provided merely by way of non-limiting example, with reference to the enclosed drawings, in which:

- Figure 1 illustrates schematically a monitoring system comprising a communication network system and a system for automatized monitoring of anomalies during operation of a network;
- Figure 2 is a block diagram of a system for automatized monitoring of anomalies comprising tagging groups of correlated anomalies;
- Figure 3 is an example of tag configuration;
- Figure 4 is an example of tag category configuration;
- Figure 5 is a flowchart of an embodiment of a method for automatically tagging and processing groups of correlated anomalies during operation of a network;
- Figure 6 is a flowchart of automatic learning of tags by applying machine learning;
- Figure 7 is an example of smoothed signal and major and minor anomaly thresholds;
- Figure 8 is an example of anomaly detection rule on a smoothed signal with respect to a threshold signal;
- Figure 9 is a flowchart of automatic reconfiguration of anomaly detection using tags;
- Figure 10 is an example of anomaly detection rule, analogous to the example of figure 7, after applying reconfiguration of anomaly detection.

DETAILED DESCRIPTION OF EMBODIMENTS

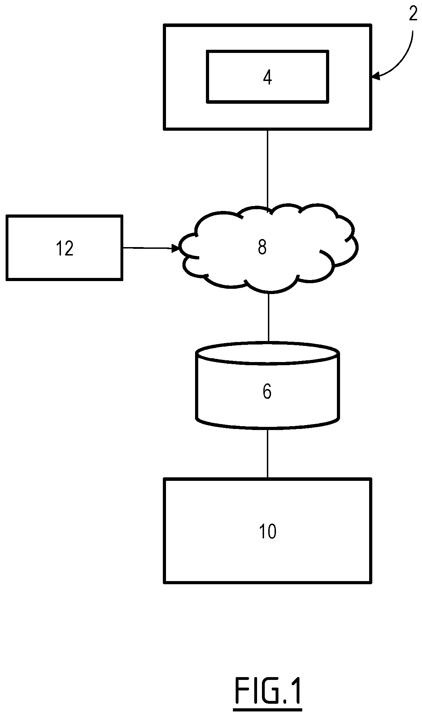

Figure 1 is a block diagram of a network monitoring system 2, the system 2 being configured for automatized monitoring of anomalies during operation of a network, in particular a communication network, including computing groups of correlated anomalies, configuring tag categories and tagging the groups of correlated anomalies, and using the tags of groups of correlated anomalies for improving the automatized monitoring of the network operation.

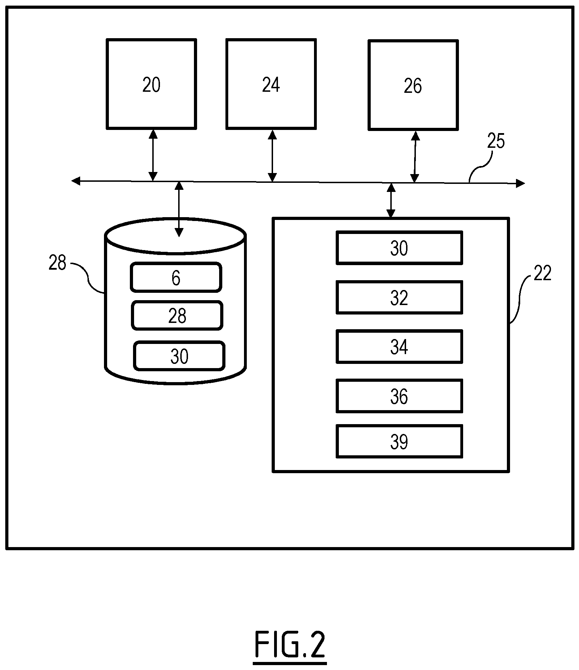

The system 2 may be implemented on a server 4, multiple interconnected servers 4, in a cloud computing system, etc. An embodiment of a server 4 is illustrated in figure 2.

The system 2 can be configured to obtain data 6, such as via a network 8, related to the operation of network elements 10. The data 6 may be obtained from, without limitation, a network management system (NMS), an element management system (EMS), an operations support system (OSS), a software-defined networking (SDN) controller, an SDN application, a database, one or more servers, etc. The network 8 may include the Internet, a wide area network (WAN), a local area network (LAN), a virtual LAN (VLAN), and the like as well as combinations. The data 6 can be in a database or the like and obtained from various network elements 10, which ultimately produce the data used by the system 2.

The data 6 comprises real time counters / KPis (Key Performance Indicators) from aggregating one or several data (e.g. CDRs) specific fields values on a predefined time interval. Each aggregation result is a point of the time signal representative of the operation aspect monitored. A KPI is a performance indicator computed as a combination of counters linked by a formula, for example the ratio of two counter values.

In a telecommunications networking example, the network elements 10 can include switches, routers, terminals, repeaters, aggregation devices, radio equipment, base stations (eNB, gNB), user equipment (UE), etc. That is, the network elements or nodes may include any devices in a network responsible for some aspect of data processing, switching, and/or transmission. Again, the data from the network elements 10 may include telemetry data, alarms, warnings, PM data, events, etc. This data can be real-time or near real-time (e.g., minutes old). In the networking example, PM data is usually provided real-time as well as in 15 minute and 24-hour increments. Further, alarms and warnings are provided immediately upon detection.

The data 6 comprises several dimensions, and thresholds may be monitored on values of data dimensions and/or on metrics computed on the data dimensions. When a real-time computed threshold on a given monitored dimension or metric is exceed, an anomaly is detected.

An anomaly, also called "case", occurs for example when a given metric, e.g. a time signal, exceeds, for some specific dimension(s) value(s), an anomaly threshold value for a given duration, which is the duration of the anomaly. The anomaly threshold values may be predetermined or adaptive, for example using linear regression. Alternatively, several anomaly threshold values may be considered in link with a severity and/or impact on the network operation, such a minor/major/critical.

More generally, each anomaly is related to a rule monitoring a metric on one or several dimensions.

For example, a rule can monitor a metric called 'call drop rate' for each RAT dimension (2G, 3G, 4G, 5G). Those are 4 independent signals for this metric, monitored in real time, and for each, thresholds are computed in order to detect anomalies per RAT.

For example, a time signal representative of "Call setup failure" is monitored. The time signal is built from counting CDRs of type 'call setup' with a field called 'status' having a value equal to "FAILURE" into a predefined time interval. The result of this count is one point for the time signal. The time signal is smoothed in order to focus on variation, the result being called smoothed signal. This counting is done continuously on successive time intervals in real time, building the real time signal monitored. At the same time, according anomaly thresholds are, for example a "minor threshold" and a "major threshold". If the recorded smoothed signal exceeds a given anomaly threshold on a sliding window, or if the signal is not between a lower and an upper anomaly threshold values, defining a "sleeve" around the baseline, an anomaly is detected and a case is raised. The signal processing is done for each dimension value of the rule, so that for example, the anomaly will be generated for dimension X having value Y only. For example, if the rule is per service, we could have an anomaly on "call setup failure" for "service=twitter".

The anomaly threshold values may be determined adaptively and automatically, or may be configured by users. The anomaly threshold values may be automatically computed during reconfiguration of anomaly detection, as explained in more detail in the following description.

Furthermore, the system 2 is configured to implement one or several methods to correlate detected anomalies (or cases) so as to obtain groups of correlated anomalies.

The anomalies which happen at the same time may be correlated through mathematical correlation and allowed relation configuration to form groups of correlated anomalies.

Advantageously, following anomalies detection, the system 2 applies one or several of the post-processing methods:

- the method described in US 11,522,766 B2 for determining the root-cause diagnosis of groups of correlated anomalies, from rule based parsing on distributions of data related to said anomalies;
- the method for automatic classification of correlated anomalies from a network through interpretable clustering as described in US 2023/0188440 A1;
- the method as described in US 11, 416, 404 B2 for detection, characterization and prediction of real-time events occurring approximately periodically.

After such post-processing, groups of correlated anomalies are provided, in real-time.

Each group of correlated anomalies may contain one or several anomalies.

A user, also referred to as an operator, who monitors the network operation, via a user device 12, connects to the system 2 for the display of a graphical user interface (GUI) that includes a visualization of various aspects of the data 6. In an embodiment, the user device 12 may be in a network operations center (NOC) or the like. The user is for example an operator qualified for monitoring the network 8. The system 2 can provide a Web application to the user device 12 for interaction.

The user device 12 comprises in particular a user interface, comprising a display screen, and an input unit allowing the user to input data/commands. According to an embodiment, the display screen may be a tactile screen, for allowing the user to input data or commands.

The network 8 can be one or more layers including optical, Ethernet, multiprotocol label switching (MPLS), Internet protocol (IP), wireless, packet, etc. In an example embodiment, the network 8 and the network elements 10 can be a wireless network including a radio access network (RAN).

The user monitors network operation through the user interface. In particular, the information of groups of correlated anomalies is accessible via the GUI, including for example : groups content and root-cause diagnosis, types of rules and metrics and dimension involved; diagnostic data distributions; signal, baseline and threshold or thresholds, for example illustrated in a same window as a function of the timeline; geographical dimensional data through for example a map. For example, document US11132109 B2 describes timeline visualization and investigation systems and methods for time lasting events.

An objective of the proposed method and system automatized monitoring of anomalies during operation of a network is to improve the monitoring of groups of correlated anomalies, by tagging groups of correlated anomalies with various tags, either user-defined or system-related, in a coherent framework. The tags may provide categories that can be considered as a classification of the groups of correlated anomalies.

Another objective of the proposed method and system is to apply automatic and/or semi-automatic processing on the groups of correlated anomalies to help monitoring or automatically reconfiguring the anomaly detection of the network operation and/or triggering of maintenance of the network equipment. The processing may include optional actions depending of the tags, as explained in further detail hereafter.

Another objective of the proposed method and system is to apply automatic reconfiguration of the anomaly detection, so as to provide useful groups of correlated anomalies to the operator, based on specific tags.

Figure 2 shows a schematic example of the functional blocks of a system 2 for automatically tagging and processing groups of correlated anomalies during operation of a network according to an embodiment.

The system 2 is for example a programmable device or a general purpose computer system, comprising one or more processors 20, and an electronic memory 22. The system 2 further comprises a network interface 24, configured to receive data from the network 8, in particular to receive data 6 representative of the network operation, stored in a data store 28. The system 2 further comprises an input/output interface 26, also called user interface 26. All elements 20, 22, 24, 26, 28 are coupled via a communication bus 25.

The processor 20 is a hardware device configured to implement software instructions, such as a CPU (Central Processing Unit), a semi-conductor microprocessor (in the form of a microchip or a chipset), or more generally any device for executing software instructions. When the system 2 is in operation, the processor 20 is configured to execute software stored in memory 22.

The data store 28 is for example a non-transitory storage medium, such as an optical disk, a magneto-optical disk, any type of non-volatile memory (e.g. EPROM, EEPROM, FLASH, NVRAM), a magnetic card or and optical card.

In an alternative embodiment, the data store 28 may be located on an external server (non represented).

The electronic memory 22 may include any of volatile memory elements, such as random access memory RAM, DRAM, SRAM, SDRAM, non-volatile memory elements such as ROM, (e.g. EPROM, EEPROM, FLASH, NVRAM), a magnetic card or and optical card. Memory 22 may have a distributed architecture, where various components are situated remotely from one another, but can be accessed by processor 20.

The processor 20 is configured to execute:

- a receptor module 30 for receiving real-time network data describing operation of the network,
- a processing module 32 for processing the received real-time network data to detect anomalies, and post-processing anomalies to compute groups of correlated anomalies,
- a configuration module 34 for configuring tag relating to anomalies, and having an associated identifier, an associated label, a condition field allowing to define one or several associated condition;
- an assigning module 36 for assigning tags among the previously configured tags to groups of correlated anomalies, comprising automatic assigning of conditional tags if the associated condition or conditions is validated for said groups of correlated anomalies
- optionally, a processing module 39 configured for applying at least one action on a group of correlated anomalies in function of an associated tag.

As described hereafter in further detail, the action or actions depend on the nature of the tags and/or on the tag configuration.

In relation with the configuration module 34, the system 2 is configured to store tag categories configurations 38 and tags configurations 40.

According to an embodiment, the modules 30, 32, 34, 36 and 39 are implemented as one or several software programs, which are executed by the processor 20. Advantageously, the modules 30, 32, 34, 36, 39 implement a method automatized monitoring of anomalies during operation of a network.

In an alternative embodiment, each of the modules 30, 32, 34, 36, 39 is implemented by a FPGA (Field Programmable Gate Array), or a dedicated integrated circuit such as an ASIC (Applications Specific Integrated Circuit).

The method for automatized monitoring of anomalies during operation of a network uses a tag configuration framework, which provides the user the possibility to configure categories of tags and tags related to a category. Advantageously, the tag framework is common for the tag categories including user-defined tags and system-related tags, also called "system tags" in the rest of the description.

System tags are related to predefined categories useful for the system itself, and may be transparent for the user.

The user is given the possibility to configure, add or delete some tags from the user-defined category tags manually. The user-defined tags are advantageously useful for personalized monitoring of the network operation, and for defining actions to be carried out on groups of correlated anomalies.

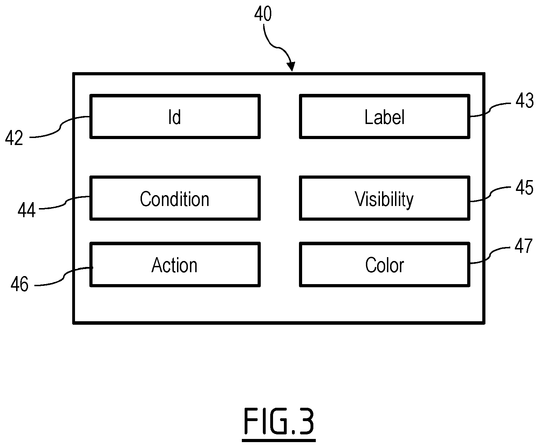

Figure 3 represents schematically a tag configuration 40 comprising a plurality of parameters defining a tag to be assigned to one or several groups of correlated anomalies.

The tag configuration 40 is related to a tag category (i.e. each tag is associated to a unique category) and comprises a tag identifier 42, which is a unique identifier used to identify the tag in the processing. The tag configuration further comprises a condition field 44, which may be empty, or not, in which case it contains one or several conditions.

The condition field 44 may be empty, in which case the tag is a non-conditional tag. In that case, the tag will be

EP 4 614 916 A1

assigned manually by the user on groups of anomalies (USE MANUAL TAGS).

If the condition field 44 is not empty, the tag is a so-called conditional tag, and the tag, either user-defined or system-related, is assigned automatically by the system 2 to a group of correlated anomalies when the condition is valid.

The condition may comprise a condition_type, indicating the way in which a condition is expressed (e.g. filter, query, SQL evaluation), a rule to evaluate for auto tagging a group of anomalies (e.g. *group_duration >100 or severity=major*), and a condition_schedule indicating a timing associated with the evaluation (e.g. "on close" indicating that the condition shall be tested as soon as the event considered to be an anomaly has stopped, or "trigger_10m" indicating that the rule shall be tested every 10 minutes).

Optionally, the tag configuration 40 may comprise an action field 46 indicating an action to be automatically carried out in relation to a group of anomalies associated to said tag. For example, action may include deletion, automatic configuration change, triggering calculations or experts investigations etc.

The tag configuration 40 further comprises configuration parameters relating to the displaying on a user interface, including a label 43, which is a human interpretable identifier, a visibility parameter 45, for example a Boolean indicating whether or not the tag shall be visible or hidden, and a color parameter 47 indicating a color code used for display on a user interface. The various tags provided will contain various values for the parameters of the tag configuration 40.

However for certain categories, especially for tags which are system-related, tags may not be predefined, the value(s) of the tag being determined during assignment. In that case, the category is configured accordingly, and tags are created on the fly without need of predefined tag configuration. For example, a tag category called 'ip address' may discover related tags values during process (meaning discover ip address values for this case).

The tags may be processed (i.e. configured and assigned) either by a user, to filter or aggregate data related to the groups of anomalies detected, and/or to automatically apply actions.

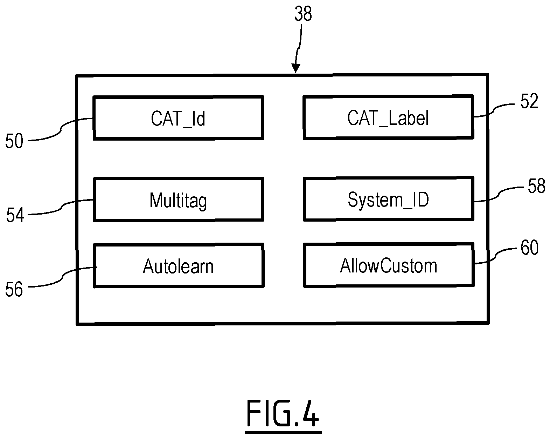

Figure 4 illustrates schematically the main parameters of a tag category configuration 38.

A category configuration 38 comprises a category identifier 50, which is a unique identifier used to identify the tag category in the processing, and a category label parameter 52, indicating a human interpretable label for designating the category.

The category configuration 38 further comprises a 'Multitag' parameter 54 indicating whether the category may or may not contain several tags (in other words, if Multitag is true, a group of correlated anomalies is allowed to have assigned several tags from the category), a Boolean parameter "Autolearn" 56, indicating whether automatic learning from a user-defined tag or tags is allowed or not allowed, as will be explained in more detail hereafter.

The category configuration 38 further comprises a System_ID parameter 58, which is equal to 'NULL' for user-defined categories, and optionally takes a system defined value for system tags, so as to automatically link the system tag category called hardcoded, tagging algorithm to use by backend system functions, also called backend services. The System_ID value cannot be modified by a user. For example, the System_ID parameter 58 may take the value "periodic" indicating that the periodicity recognition should be used for auto-tagging. In other terms, the periodicity seeker algorithm will use this category to assign tags related to it's output results.

The category configuration 38 further comprises a parameter 60 "AllowCustom", which is Boolean, indicating whether the system 2 allows assigning tag values (also called custom tags) which are not predefined.

In both categories of user-defined tags or system-related tags, the tags may be conditional tags, i.e. having an associated condition or rule to be validated, according to the condition schedule, to determine whether the considered tag should be applied to a group of correlated anomalies.

It is to be noted that a system category either has a System_ID or a condition, since all system categories are assigned automatically.

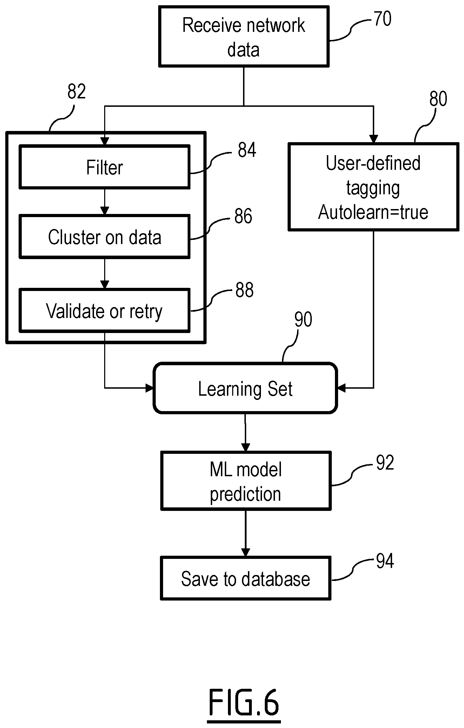

Also, and as described in further detail in respect to figure 6, non-conditional tags may also be applied.

User-defined non-conditional tags may be manually assigned by a user, through the user interface for example, the manual assignment being preferably replaced, in time, with automatic prediction using a prediction model which is trained by supervised machine learning from a learning of manual tag assignments.

The system tags include non-conditional system tags which are also called hardcoded system tags. A hardcoded system-related tag is linked to one or several algorithms related to system categories. For example, any system tag that can't be expressed by a condition through configuration is likely to use a hardcoded algorithm for assignment. For example, if a system tag 'periodic' is configured to tag groups of anomalies with periodic data, related tag category will provide a system identifier to link with the algorithm making the assignments. In that case, it will be the periodicity seeker algorithm defined in patent US 11,416,504 B2.

Several system tags categories use cases may be considered, including: {data source unavailability, external event, weak result, major contributor for diagnosis}.

The "data source unavailability" system tag is automatically assigned to groups of anomalies if the source of data related to the monitored metric has a cut-off. Advantageously, this system tag helps to automatically determine if an anomaly may be due to a lack of input feed, and therefore may be considered as a false anomaly (i.e. a false positive in the process of anomalies detection).

7

The system tag "periodic" is automatically assigned to anomalies which are periodic or quasi-periodic and form therefore a group of periodic anomalies. For example, advantageously, the method described in patent US 11,416,504 B2 is applied to detect and characterize events occurring approximately periodically.

The system tag "external event" may be used to better identify anomalies that occur during a known or predicted external event, such as for example a large gathering (sports meetings, concerts etc), bad meteorological conditions predicted for a given geographical area, or planned maintenance of network equipment, planned software upgrade, modifications of network topology or configurations, which are likely to cause a communications overload in the network. By adding, for each planned external event, a system tag comprising conditions with rules related to some dimensions related to the event, for example site names related to the telecommunications cells, or conditions related to an auto-diagnosis, such as a root-cause diagnosis, of related anomalies and/or to a network element pointed as result of the auto-diagnosis algorithm. Such a system tag provides contextual information on anomalies.

The system tag "Weak result" is a conditional system tag assigned to groups of anomalies considered to be of low interest or accuracy, for example with minor anomaly threshold cross, for example an anomaly threshold cross less than a predetermined percentage of the anomaly threshold value, and/or short duration, i.e. a duration lower than a given predetermined nominal duration, and/or having no periodicity and/or whose single root-cause diagnosis could not be determined. For example, the single root-case diagnosis may be automatically determined using the method proposed in patent US 11,522;766 B2.

Advantageously, the "weak result" tags will further be reused into statistics in order to identify rules that would require a reconfiguration, and schedule this reconfiguration based on anomaly detection algorithm parameter automatic changes in order to increase lower threshold, in order to decrease further weak results ratio.

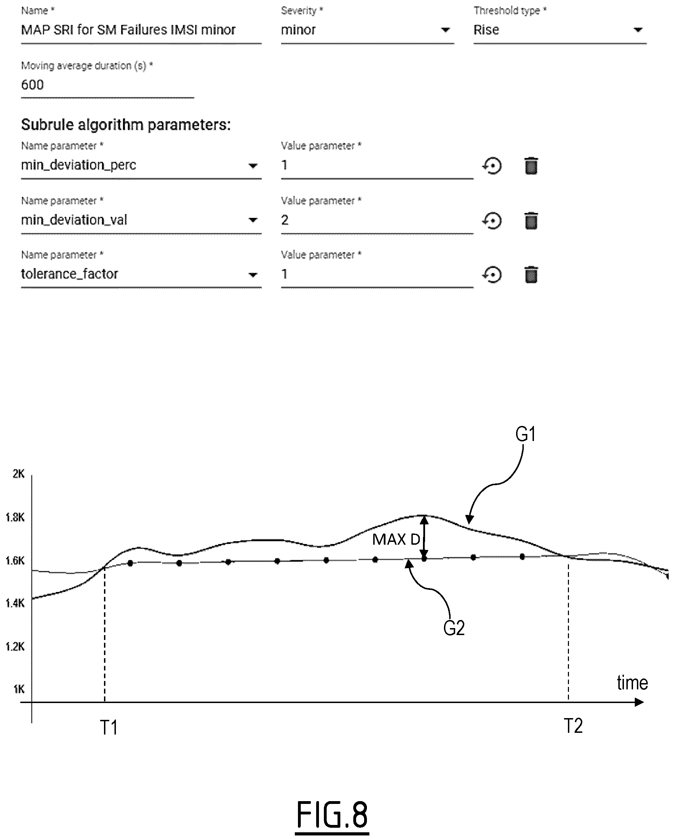

In other words, a "weak result" tag may be used for reconfiguration of anomaly detection as explained in a detailed description with reference to figure 8.

The "major contributor for diagnosis" system tag is assigned for each monitored dimension value seen as a major contributor during the anomaly, the major contributor or contributors being for example determined by applying the method for determining a root-cause diagnosis as described in patent US 11,522,766 B2.

System tags are assigned automatically to groups of anomalies, to ease the automation of anomalies detection, and to apply optional actions, for example to help automatically applying maintenance (e.g. trigger tickets support, trigger advance pluggable algorithms on specific tags); automatically analyzing anomalies, by triggering automatically exports or advanced statistics computation; automatically improving the configuration, so as to increase accuracy and/or reduce the number of false positives; automatically deleting some cases which are related for example to an external event with known consequences on the network, and therefore are not anomalies that need maintenance or intervention.

Therefore, advantageously, the system tags help improving the monitoring system autonomy, and help saving operator time by avoiding to spend time or trigger maintenance on events which may be considered as anomalies but are in fact temporary and due to a known cause.

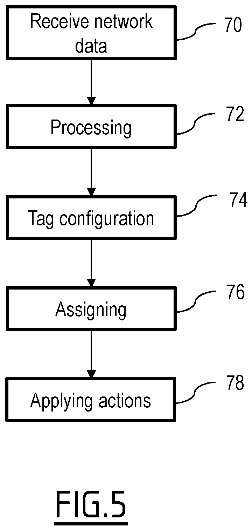

**Figure 5** is a flowchart of the main steps of a method for automatically tagging and processing anomalies during operation of a network according to this disclosure.

The method comprises receiving 70 real-time network data describing operation, and processing 72 the received real-time network data to detect anomalies, and post-processing anomalies to compute groups of correlated anomalies. The network data is collected and processed continuously.

As already explained, the network data describing operation of the network is collected in real time from multiple heterogeneous sources of timed basic counters and related dimensional data reflecting network health (system information, network equipment logs, performance management systems, passive probes or system testers..), or other RT timed data that can impact network (weather for example). For example the network data comprises real time counters/ KPis (Key Performance Indicators) from aggregating one or several data (e.g. CDRs) specific fields values on a predefined time interval. Each aggregation result is a point of the time signal representative of the operation aspect monitored. A KPI is a performance indicator computed as a combination of counters linked by a formula, for example the ratio of two counter values.

The time signals representative of the operation of the network elements monitored are processed to detect anomalies, through 'anomaly detection Rules' configuration that allows to chose among :

- the dimension(s) used (example : an anomaly detection of counter X per service),
- the type of algorithm used to compute the baseline (fixed, adaptative (simple moving average, linear regression...),
- the type of context dimensional data required for deeper investigation when anomaly occurs (called diagnostic data). Example: geographical zone identifier, service name, equipment name...).

The anomaly detection processing comprises real-time computation of anomaly threshold(s) according to a rule configuration on each signal related to a counter (one signal per cardinality combination), an anomaly being detected if the smoothed signal bypasses (or crosses) the anomaly threshold. In that case an anomaly is stored as new anomaly. The values of some parameters, such as minimum deviation values, tolerance factors, may be user defined via the user interface. Those parameters are used to define the sensitivity of the anomaly detection through adaptive thresholds

The system is configured to manage opened anomalies until their closure and the storage of important diagnostic data during anomaly duration.

The processing 72 further comprises determining whether anomalies happening at the same time (during a same period) correlate through mathematical correlation, given allowed relationships configurations. Such anomalies are then gathered into groups of correlated anomalies. The determination of the root cause of the group is processed, as described in US 11,522,766 B1. During this process, topology data at transport layer can be used for path analysis.

Furthermore, processing 72 may comprises searching for recurrent (periodic) anomalies, for example using the method described in US 11,416,504 B2.

All information of groups of anomalies are accessible to the user through the user interface, in particular groups content and root cause diagnosis, types of rules and metrics and dimensions involved, diagnostic data distributions, signal, baseline and threshold(s) visualization, geographical dimensional data through map. The user can see the evolution of anomalies in real-time.

The method further comprises tag configuration 74 configuring tags relating to anomalies, each tag having an associated identifier, and belonging to a tag category.

For example, the tag configuration step may be carried out, for user-defined tags, with the help of a user interface. A user may then, via the user-interface, fill in value for various tag categories as described with reference to figures 3 and 4 for each tag configuration.

For conditional tags, a condition to be evaluated for automatically assigning the tag to a group of correlated anomalies is defined.

The trigger of evaluation depends on the conditionSchedule configuration.

For example, a condition "schedule=on Close" with a condition "duration>100 OR severity=minor" will be evaluated against group duration and severity. If the condition matches, the tag is assigned to the group.

Furthermore, the tag configuration step 74 further comprises providing system tags from the system tags category are already configured and stored in a corresponding memory structure, e.g. a database. As already explained, the system tags include but may not be limited to the following system tags categories: { data source unavailability, system reboot, periodic, external event, weak result, major contributor for diagnosis }.

As a complement, the tag configuration 74 may comprise using a prediction model, previously trained on a learning set for automatic learning of prediction model(s) to predict tags, therefore defining non-conditional tag configurations, as explained in further detail hereafter in reference to figure 6.

The method further comprises assigning 76 one or several tags from the tags defined at step 74 to the groups of correlated anomalies received.

In particular, the system-related tags are automatically assigned.

The conditional tags (i.e. field 44 is not empty) are automatically assigned for all tags, either user-defined or system tags: the assignment 76 is done if the condition matches the group of correlated anomalies data.

Furthermore, when a prediction model obtained by automatic learning is available, the prediction model is applied to predict a tag to be assigned, depending on group of anomalies characteristics.

Optionally, for the groups of correlated anomalies having a tag assignment whose tag configuration is associated to one or more actions, the action(s) are then applied at processing step 78.

It is to be noted that the tagging extends the existing filtering capacities, allowing a user to filter groups of correlated anomalies based on tags, via the user interface.

Via the user interface, the user is provided the possibility to apply filtering on one or several tags TAG_1 ,... ,TAG_n, with the help of the user interface, to view network data relative to a group of anomalies associated with the tags TAG_1,..,TAG_n.

For example, if the tags contain "external event" system tags, further information relative to the external event(s) may be displayed on the user interface, therefore the user, who is typically an operator monitoring the network operation, has full information relative to the context of the anomalies.

The processing 78 may trigger an automatic action based on one or several tags, as defined by "Action" field 46. For example, the automatic action may be triggering support tickets, such as for example provide (or export) the network data including anomalies to a group of experts for analysis, or such as trigger automatic analysis such as statistics computations.

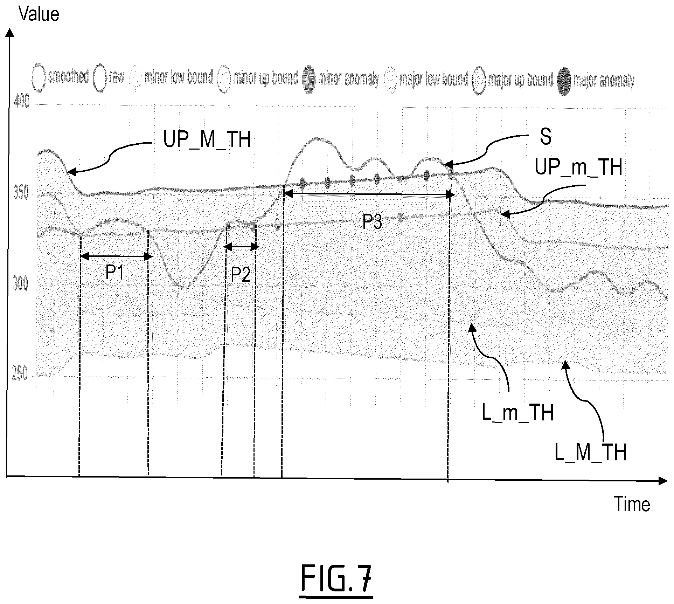

According to an aspect, the processing 78 comprises anomaly detection reconfiguration based on the "weak result" system tag, as explained in further detail with respect to figure 7.

The method steps 70 to 78 are repeated, at a given frequency, advantageously allowing continuous improvement of the system, creation of new tags and storing or upgrading of their corresponding configurations. This is particularly useful when applying automatic anomaly detection reconfigurations, and evaluate the new accuracy through tag assignments, that may lead or not to trigger again reconfigurations.

As described with reference to figure 6, the method also comprises automatic learning of a prediction model to determine tags automatically.

To build a prediction model, the prediction model should be trained by a learning set having groups of correlated anomalies as features, and a label for training.

The label for training can either be provided by the user manual tag assignments (step 80), or through the clustering 82 according to the method described in US2023/0188400 A1, incorporated herein by reference, comprising filtering 84, automatic clustering 86, and optionally, validating 88 the proposed clustering by a user, via a user interface. The process of training and providing the model is automatic if the tag category is defined with autolearn=true. Note that one model is required per category to autolearn.

Either step 80, or step 82, provides groups of correlated anomalies, forming one or several learning set(s) 90, having an associated label (label for training), either provided by the user or by the system.

The learning set 90 comprises for example groups of correlated anomalies, and corresponding anomalies durations, root-cause diagnosis, single diagnosis, periodicities, and a corresponding label.

In case of user-defined tagging, the label defined by the user is used.

In case of automatic clustering, the cluster ID can be used as tag label, and the clustering process identifier is used as a tag category. This creates a unique identifier for the clustering process that becomes a classification reference, seen as a tag category.

The learning set 90 is provided for training (step 92) a machine learning (ML) prediction model, which will learn to classify the anomalies of the learning set 90 to match the corresponding label.

Therefore, each user category configured with « Autolearn=TRUE » will lead to create an associated prediction model, and each retained clustering result will lead to create a prediction model.

According to an embodiment, the training applied is supervised decision tree learning, the prediction model being a classification decision tree.

The trained prediction model obtained after supervised tree learning 92 is then saved at saving step 94 into an adequate memory structure, such as a database.

Advantageously, the prediction model may be updated by training again at a later step.

Furthermore, advantageously, the result of tagging using the prediction model may be provided to the user for validation, so as to ensure that the tagging is correct. In other words, it means that the user should be allowed to change tags automatically set by a model prediction, so that this fixed information will be used in an incoming learning set when updating model in the future.

Advantageously, the proposed method allows automated tagging of groups of anomalies based on automated clustering, in a useful manner for user who monitor the operation of a network but, due to the large amount of data, finds it difficult to define conditional tags.

Therefore, the tagging based on a prediction model that is automatically learnt from the clustering result, or learnt from the tags initially provided by the user (i.e user manual tags assignment) is very useful to help user for monitoring network operation.

**Example of use case: External Event**

Hereafter is described in more detail the "external event" system tag configuration and use.

As previously explained, the system tag "external event" may be used to better identify events that occur during a predefined external event, which are likely to cause a communications overload or anomalies in the network, such as for example:

- a large gathering (sports meetings, concerts etc),
- bad meteorological conditions predicted for a given geographical area,
- planned maintenance of network equipment,
- planned software upgrade, modifications of network topology or configurations,

A specific system tag "external event: X" is useful to filter the anomalies, and compute statistic to determine the impact of an external event X.

Information useful to generate the configuration of an external event tag includes for example:

- a type of external event (e.g. weather, maintenance, sport event etc),
- a short description of the event (optional),
- an estimated severity impact (optional),
- a start date and hour,
- an end date and hour,

- one or a list of dimensions of network data that will help targeting one or several elements, in particular network equipment, involved.

For example if one or more equipment of the network are targeted, list the types and identifier of each equipment.

> ➢ *Example 1: telecom cell: cell 432, telecom cell: cell 433*
> ➢ *Exemple 2 : router: router 3432*
> ➢ *Exemple 3 : ip : 10.3.33.42x*

*Note: certain types of 'virtual' types can hide several real equipments*

*Example: cell cluster 22, including a given number of cells, each corresponding to one network equipment)*

According to a use case example, for a sports gathering event (e.g. a football match), the user (e.g. telecom provider) knows the cells in charge of a special event around a stadium. A cluster of those cells called *'stadium_cluster'* may be then created and then used to configure special external events in the stadium, for example football matchs.

In a different use case, as for example an external event relating to meteorological conditions, the list of targeted equipment can be large and may be defined by a geographical location, such a spatial point provided by a positioning system (such as GPS system) and an associated radius to define a geographical area containing several cells.

The system 2 converts the external events into conditional tags automatically, without any manual configuration, and applies the conditions for determining whether to assign a given "external event" tag to the incoming anomalies.

The testing may include first, checking whether the conditions on the dimensions of the anomaly are validated.

For example, a rule X is designed to provide *anomalies per CELL*

An anomaly is detected for this rule X on *CELL=cell_*455

If an event *'maintenance'* is configured that *contains CELL_cell_455* in the targeted element(s) list, and happens at the same time than then anomaly, then the match is validated and the group of the anomaly will be tag with *'event=maintenance'*.

If no match is found, the testing may further comprise a second testing of the dimension of the single root diagnosis of the anomaly.

For example, a *rule X* is designed to provide *anomalies per RAT.*

An anomaly is detected for this *rule X on RAT=3G.*

An external event *'maintenance' is configured that contains CELL_cell_455* in the targeted element.

If the dimensions of the anomaly don't match, the single root-cause diagnosis of the anomaly will be tested.

The diagnosis of the anomaly gives *cell_455* and *cell_444.*

The diagnosis contains the external event *'maintenance' targeted* element, i.e. in this case contains *cell_455.* If the external event happens at the same time than the anomaly, then the match is validated, and the group of the anomaly will be tag with *'event=maintenance'.*

If those two tests fail, maybe the link between elements of the event and anomaly data is not direct, but linked through the network topology.

Indeed, if the network topology is known, a rule system monitor may provide anomalies on dimension routers, switches or the root cause diagnosis may point to routers, switch or switches etc. The configuring of the external events may then also indicate routers or switches impacted by the external event.

Furthermore, a path analysis may be applied to determine if an anomaly matches an external event.

**Example of use case: Weak Result**

Hereafter is described in more detail the "weak result" system tag configuration and use for anomaly detection reconfiguration.

As already explained, the system tag "Weak result" is a conditional system tag assigned to groups of anomalies considered to be of low interest or low accuracy.

The aim of 'weak result' tag is to help detecting "weak" anomalies, or in other terms inaccurate anomalies, and then to automatically reconfigure so as to decrease the number of such inaccurate anomalies.

For example the conditions associated with "weak result" tag are:

- minor anomaly threshold cross (or "by-pass"), for example the maximal threshold bypass is less than a predetermined percentage of the threshold value, and/or
- short duration, i.e. a duration lower than a given predetermined nominal duration, and/or
- minor severity and/or

- no periodicity and/or
- no single root-cause diagnosis could not be determined and/or
- not an intern system anomaly, but a network metric based anomaly.

It is considered that short duration anomalies with minor anomaly threshold bypass, possibly without root-cause diagnosis, due to no relevant item within the dimensions analyzed, are not really relevant for the user because they won't be able to have a remediation.

One or several "weak result" tags are defined, and are assigned in real time by the system on corresponding anomalies.

As an optional close loop action, an algorithm can be triggered at scheduled intervals in order to determine if a reconfiguration of anomaly detection, i.e. of the rule applied for detecting anomalies, can lead to better accuracy for the end user.

By reconfiguration it is meant amendment of the values of some parameters defining the anomaly thresholds as compared to the baseline.

According to an example the anomaly detection is carried out as follows.

A rule R for anomaly detection is attached to a metric, and defines dimensions to use. A time signal is obtained for each dimension, from real-time counters or KPI, and the baseline base(t) is computed on sliding windows by applying a given type of algorithm (e.g. linear regression, polynomial regression, moving average...) on the time signal. A real-time root mean square error, RMS(t), is also computed.

In order to proceed to anomaly detection, one or several anomaly thresholds are computed from the baseline, defining major and minor anomalies, for example upper_major and lower_major thresholds to define major anomalies, and upper_minor and lower_minor thresholds to define minor anomalies respectively.

It is understood that the baseline, the RMS and the various anomaly threshold computed from the baseline are signals which vary with time.

For the "weak result" the minor anomaly thresholds may be used, for example:

$$UP\_m\_TH\ (t)=baseline(t)+Delta(t)$$

$$L\_m\_TH(t)=baseline(t)-Delta(t)$$

Where UP_m_TH(t) is the upper threshold for minor anomaly detection (upper_minor threshold), and Lr-m_TH(t) is the lower threshold for minor anomaly detection (lower_minor threshold).

It should be noted that more than two types of anomalies and/or more than two anomaly thresholds per type of anomaly may be defined in the general case.

In other words, a minor type anomaly is detected if a smoothed signal representative of real-time data monitored is above the UP_m_TH(t) for a duration (anomaly duration) or below the L_m_TH(t) for a duration (anomaly duration).

It is understood that if major anomaly threshold are bypassed, then the anomaly is detected as major.

Figure 7 illustrates schematically an example of smoothed signal S during a period of time, and the upper major anomaly threshold signal UP_M_TH, the lower major anomaly threshold signal L_M_TH, the upper minor anomaly threshold signal UP_m_TH, the lower minor anomaly threshold signal L_m_TH.

In the example, only the respective upper major anomaly threshold UP_M_TH and upper minor anomaly threshold UP_m_TH signals are bypassed by the smoothed signal S, respectively during periods P1 and P2, the upper minor anomaly threshold UP_m_TH is bypassed, and during period P3, the upper major anomaly threshold UP_M_TH is bypassed.

The parameter Delta is a deviation parameter computed from the following parameters: minimum deviation percentage, minimum deviation value and tolerance factor.

According to an example, three different deviation values Delta1, Delta2, Delta 3 are computed, and the maximal value among them is chosen as the applied deviation:

$$Delta=max(Delta1,\ Delta2,\ Delta3)\quad(EQ\ 1)$$

The three deviation values may be computed as follows:

$$Delta1=min\_deviation\ value\quad(EQ\ 2)$$

$$Delta2=\ min\_dev\_percent/100xbaseline\quad(EQ\ 3)$$

$$\text{Delta3=RMSx tolerance\_factor} \qquad \text{(EQ 4)}$$

As can be apparent, Delta1 is constant, whereas Delta2 and Delta3 depend on time, being computed respectively from the baseline signal and the RMS signal.

Figure 8 shows an example of rule for anomaly detection and a corresponding time signal which exceeds the minor anomaly threshold for a given duration.

The rule applied is "MAP SRI for SM Failures IMSI Minor", which monitors SRI (Send Routing Information) for Short Message (SM) Failures for MAP protocol.

The parameters defined for anomaly detection are respectively "min_deviation_perc" referring to Minimum deviation percentage, "min_deviation value" referring to Minimum deviation value and "tolerance_factor" defining a value of tolerance factor. These parameters are used for computing the deviation "delta" to apply to compute the minor and major thresholds.

A graph G1 illustrates the smoothed signal representing the variation of number of subscribers concerned by the SM Failures during a temporal duration (observation period), and G2 representing the "upper minor anomaly threshold", computed from the baseline (not represented) and the parameters as explained above.

The smoothed signal crosses (i.e. is above) the anomaly threshold (upper minor anomaly threshold) for a given duration (anomaly duration) between T1 and T2. The maximum deviation D_max between the smoothed signal and the anomaly threshold is also shown on figure 8.

The group of anomalies concerned is tagged as "weak result" since this anomaly concerns a minor threshold cross (i.e. D_max percentage < threshold ) and/or a short duration.

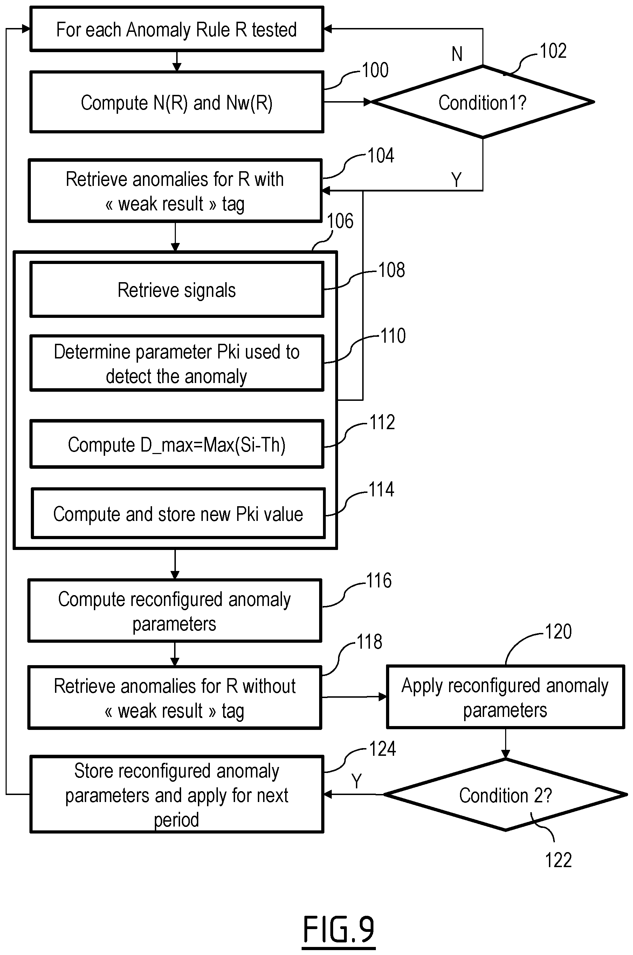

Figure 9 illustrates the main steps of the automatic reconfiguration of anomaly detection using the "weak results" tags, carried out at scheduled times, for observation periods of given duration (e.g. every hour or every 24 hours).

The automatic reconfiguration comprises, for each anomaly rule R tested during the observation period, computing 100 the total number N(R) of anomalies to rule R, and the number Nw(R) of anomalies to rule R which belong to groups of anomalies tagged with "weak result" tag.

Then, first condition Condition1 is tested 102. The first condition Condition1 comprises, according to an embodiment, comparing the total number N(R) to a first threshold Th1 and comparing a ratio Nw(R)/N(R) to a second threshold Th2. If both N(R) and Nwk(R)/N(R) exceed the corresponding threshold, the first condition Condition1 is validated (i.e. answer Yes to test 102). For example, the first threshold Th1, is equal to 1000 (considering an observation period of 24 hours) and the second threshold Th2 is equal to 40% (for an observation period of 24 hours).

In the first condition is not validated, i.e. if the total number of anomalies is lower than the first threshold Th1 and/or if the ratio of "weak result" anomalies as compared to the total number of anomalies is lower than the second threshold, the process is applied to another rule R.

If the first condition is validated, the test 102 is followed by retrieving 104 all anomalies for rule R tagged with a "weak result" tag during the observation period.

Then a signal processing step 106 is applied on signals associated to each anomaly to rule R tagged as weak result.

The signal processing 106 comprises retrieving 108 signals including the baseline signal, the anomaly threshold signal(s), the smoothed signal Si.

For example, the upper minor anomaly threshold, referred to as anomaly threshold Th, is retrieved.

The signal processing further comprises determining 110 which parameter Pki among the parameters "min_deviation_value", "min_deviation_perc" and "tolerance_factor" was used to compute the deviation Delta used to compute the anomaly threshold (at anomaly start time). Th applied to detect the anomaly on smoothed signal Si.

For example, the determining step 110 comprises inverting the formulas for computing Delta1, Delta2 and Delta3 defined above before the start of the anomaly.

The signal processing 106 further comprises computing 112 a maximum deviation D_max between the smoothed signal Si and the anomaly threshold Th.

Next, the signal processing comprises computing and storing 114 a new value of parameter Pki, such that the anomaly threshold Th computed with the new value of parameter Pki is higher than or equal to the smoothed signal Si, or in other terms, such that the smoothed signal Si is below the anomaly threshold computed with the new value of parameter Pki.

After all the signals Si are processed, a plurality of candidate new values of the parameters "min_deviation_value", "min_deviation_perc" and "tolerance_factor" are stored.

These candidate new values are used to compute 116 reconfigured anomaly parameters. For example, a list of candidate values is obtained for each of the parameters "min_deviation_value", "min_deviation_perc" and "tolerance_factor", and the median value of each list is chosen.

Alternatively, the reconfigured anomaly parameter value, for each parameter, is computed as the maximum value of the corresponding list of candidate values, or the mean value plus the root mean square error of the values of the list.

Alternatively, all techniques (median, maximum, mean plus root mean square error) can be evaluated as described below, and the one with the best accuracy will be retained as reconfigured values.

Therefore, the steps 108 to 116 cooperate to achieve computing, for an observation period and for a given anomaly rule, from signals associated to anomalies tagged as weak results, reconfigured values of parameters used for determining the anomaly threshold.

The reconfiguration further comprises retrieving 118 all anomalies for rule R which are not tagged with a "weak result" tag during the observation period, i.e. the anomalies for rule R which are not considered to be weak results (for example, refer to the anomaly during period P3 in the example of figure 7).

The reconfigured anomaly parameter values previously obtained are then applied 120 to compute the threshold(s) and apply the computed threshold(s) for each smoothed signal for anomaly detection, and a number N'_nw(R) of anomalies detected with the reconfigured anomaly parameter values is computed.

The number N'_nw(R) of anomalies detected is used to verify 122 whether a second condition Condition2 is validated, the second condition expressing the accuracy of reconfiguration of anomaly detection.

For a given rule R, let Nw(R) designate the number of anomalies to rule R tagged as "weak result" before the reconfiguration, and N'w(R) designate the number of anomalies among the anomalies to rule R previously tagged as "weak result" after the reconfiguration; N_nw(R) the number of anomalies to rule R not tagged as weak before the reconfiguration, and N'_nw(R), as explained above, the number of anomalies detected after reconfiguration among the anomalies to rule R previously detected and without a "weak result" tag.

According to an example, the following formula is applied to compute an estimation of a percentage of accuracy Acc:

(EQ 5)

$$Acc = \frac{1}{2}\left(100 \times \left(1 - \frac{N'_{w(R)}}{N_{w(R)}}\right) + 100 \times \frac{N'_{nw(R)}}{N_{nw(R)}}\right)$$

The second condition Condition2 applies a comparison of the value Acc with an accuracy threshold Th_acc, for example at least equal to 80%, which is an accuracy percentage.

The second condition Condition_2 is validated if Acc is at least equal to the accuracy threshold Th_acc.

As can be seen form (EQ 5), the accuracy Acc is maximum if N'w(R) is minimal and N'_nw(R)= N_nw(R), or, in other terms, if all the non weak anomalies to rule R are still detected whereas the number weak anomalies to rule R is close to zero.

It is understood that the computation of Acc is given as an example, and other methods for estimating the accuracy of reconfiguration may be applied, as for example comparing the number N'_nw(R) of anomalies detected to a threshold.

According to a variant, the second condition Condition2 is computed for all techniques (median, maximum, mean plus root mean square error), for example, the accuracy estimation is computed for each of the techniques, and the one with the highest accuracy Acc is retained.

Advantageously, the reconfigured anomaly parameter values are memorized for use only if they allow detecting sufficiently well the non-weak anomalies, because such anomalies are considered important for the system operation monitoring.

If the second condition Condition2 is validated, the reconfigured anomaly parameter values are stored 124, so as to be applied during a following observation period. Otherwise, the anomaly rule parameter values are not reconfigured.

According to an embodiment, automatic reconfiguration of anomaly detection is achieved by applying the reconfigured anomaly parameter values during the following observation period. The reconfigured anomaly parameter values are optionally displayed to inform the user.

According to a variant, the reconfigured anomaly parameter values are displayed on the user interface, as a recommendation for the user, and the user validates or modifies the parameters values before the reconfiguration of the anomaly detection is applied. In this case, the reconfiguration of anomaly detection is considered to be semi-automatic.

Advantageously, the automatic or semi-automatic reconfiguration of anomaly detection automatically computes anomaly detection parameters to avoid detecting too many weak anomalies while detecting the non-weak anomalies. The ratio of anomalies tagged as weak anomalies to the total number of detected anomalies for the rule considered should decrease during the next observation period.

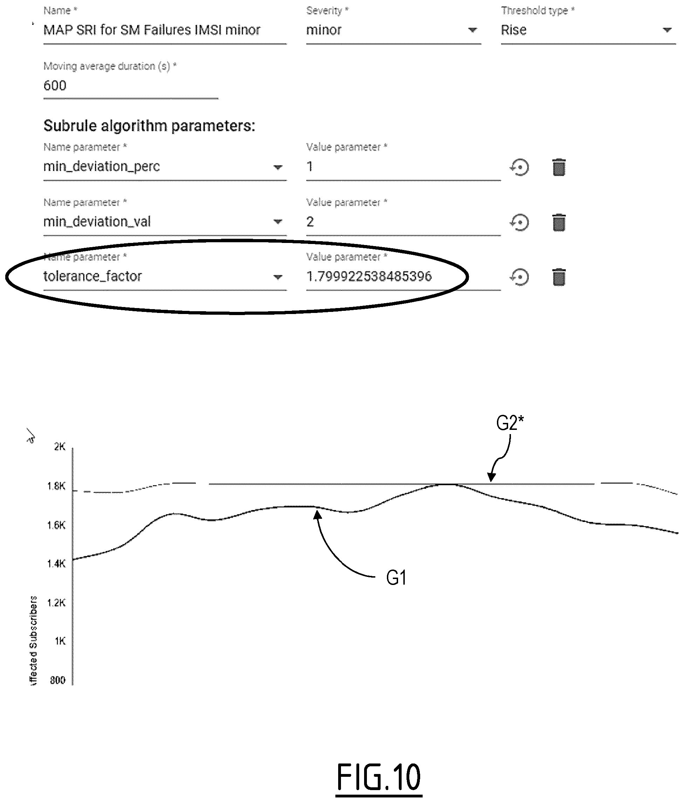

Figure 10 illustrates schematically the case shown in figure 8, after reconfiguration of the tolerance factor value by applying the method as described above.

The new value of the tolerance factor is displayed as shown in the figure 10, to allow the user to check the proposed value.

After the user's validation, or automatically, the tolerance_factor parameter new value is applied. As shown in the example of figure 10, the reconfigured "minor anomaly threshold" G2* is above the smoothed signal G1, and therefore no weak anomaly is detected on the smoothed signal G1.

**Claims**

1. A method for automatized monitoring of anomalies during operation of a network, the method comprising:

   - receiving (72) real-time network data describing operation of the network,
   - processing (74) the received real-time network data to detect anomalies, and post-processing anomalies to compute groups of correlated anomalies,

   the method being **characterized in that** it further comprises :

   - configuring (74) tags relating to anomalies, each tag belonging to a tag category and having an associated identifier, an associated label, a condition field allowing to define one or several associated condition(s),
   - assigning (74) tags among the previously configured tags to groups of correlated anomalies, comprising automatic assigning of conditional tags if the associated condition or conditions is validated for said groups of correlated anomalies.

2. The method according to claim 1, wherein each tag further comprises an action field (46) allowing to define at least one action to be carried out automatically, the method comprising, for each group of correlated anomalies tagged with a tag having at least one associated action, applying (78) said at least one action.

3. The method according to claims 1 or 2, wherein at least some of the tags are non-conditional tags, the method further comprising, for at least one non-conditional tag, supervised automatic learning (92) of a prediction model to predict the non-conditional tag, the prediction model being a classification decision tree trained by a tree-learning on a learning set of network data representative of groups of correlated anomalies tagged with said non-conditional tag.

4. The method according to claim 3, wherein the non-conditional tag is a user-defined tag, and wherein the learning set is obtained from network data initially labelled with said user-defined tag assignment.

5. The method according to claim 3, comprising automatic clustering (82) applied on incoming network data to obtain clusters of groups of correlated anomalies, each cluster forming a learning set for an associated tag category.

6. The method according to any of claims 1 to 5, wherein the tags categories comprise system-related categories, each system-related tag being either associated with backend system function(s) or having an associated condition, and wherein the method comprises automatically assigning the system-related tags.

7. The method according to claim 6, wherein the system-related tags comprise a "data source unavailability" tag indicating whether a source of network data relating to a monitored metric of a group of correlated anomalies is cut-off.

8. The method according to claim 6, wherein the system-related tags comprise an "external event" tag relative to a planned external event, said external event tag comprising conditions with rules related to one or several network dimensions related to the planned external event.

9. The method according to claim 6, wherein the system-related tags comprise a conditional tag identifying weak results, said weak result tag being assigned based on conditions verified on anomaly detection, an anomaly associated to a rule being detected on a comparison between a smoothed signal and an anomaly threshold signal, weak result conditions including a maximal deviation percentage between smoothed signal and anomaly threshold being lower than a predetermined percentage of the anomaly threshold value.

10. The method according to claim 9, wherein said weak result conditions further include at least one of {anomaly duration lower than a nominal duration, no periodicity detected, no single root-cause diagnosis attached}.

11. The method according to claims 9 or 10, further comprising computations(100) of statistics per rule of anomaly detection on predefined observation periods, and selecting (102, 104) rules having a number of anomalies higher than a first threshold, with a ratio of anomalies having a tag weak result higher than a second threshold, and further applying reconfiguration (116-124) of anomaly detection for selected rules.

12. The method according to claim 11, wherein the reconfiguration comprises computing (116), for an observation period and for a given anomaly rule, from signals associated to anomalies tagged as weak results, reconfigured values of parameters used for determining the anomaly threshold.

13. The method of claim 12, wherein the reconfiguration further comprises applying (120) said reconfigured values of parameters to groups of anomalies which are not tagged as weak results, and computing (122) an accuracy estimate of the reconfigured values of parameters based on statistics on detected anomalies computed before and after applying said reconfigured values of parameters.

14. The method according to claim 13, further comprising applying the reconfigured values of parameters used for determining the anomaly threshold computed on a following observation period if the accuracy estimate is higher than an accuracy threshold.

15. The method according to any of claims 1 to 14, wherein the network data includes one or several metrics and dimension linked to said group of correlated anomalies, among group duration, group impacted subscribers, severity, user flags, number of anomalies contained in group, root cause diagnosis, presence of approximate periodicities, nature of rules linked to anomalies, nature of root cause diagnosis elements targeted, nature of root cause diagnosis 3GPP cause and geographic data linked to dimensions.

16. The method according to any of claims 1 to 15, wherein the processing comprises filtering groups of anomalies based on associated tags, automatically analyzing anomalies, triggering automatically exports or advanced statistics computation or group deletion or automatically reconfiguring anomaly detection.

17. A computer program product having instructions which, when executed by a processor of a programmable device, perform the method as claimed in claims 1 to 16.

18. A system for automatized monitoring of anomalies during operation of a network, comprising:

   - a receptor module (30) receiving real-time network data describing operation of the network,
   - a processing module (32) processing the received real-time network data to detect anomalies, and post-processing anomalies to compute groups of correlated anomalies,

   the system being **characterized in that** it further comprises :

   - a configuration module (34) for configuring tags relating to anomalies, each tag belonging to a tag category and having an associated identifier, an associated label, a condition field allowing to define one or several associated condition(s),
   - an assigning module (36) for assigning tags among the previously configured tags to groups of correlated anomalies, comprising automatic assigning of conditional tags if the associated condition or conditions is validated for said groups of correlated anomalies.

FIG.1

FIG.2

40

42 — Id

43 — Label

44 — Condition

45 — Visibility

46 — Action

47 — Color

## FIG.3

FIG.4

Receive network data — 70

Processing — 72

Tag configuration — 74

Assigning — 76

Applying actions — 78

FIG.5

Receive network data — 70

82

Filter — 84

Cluster on data — 86

Validate or retry — 88

User-defined tagging Autolearn=true — 80

Learning Set — 90

ML model prediction — 92

Save to database — 94

FIG.6

FIG.7

Name *
MAP SRI for SM Failures IMSI minor

Severity *
minor ▼

Threshold type *
Rise ▼

Moving average duration (s) *
600

## Subrule algorithm parameters:

Name parameter *
min_deviation_perc ▼

Value parameter *
1

Name parameter *
min_deviation_val ▼

Value parameter *
2

Name parameter *
tolerance_factor ▼

Value parameter *
1

## FIG.8

For each Anomaly Rule R tested

Compute N(R) and Nw(R) ──100

──102 N

Condition1?

──104 Y

Retrieve anomalies for R with « weak result » tag

──106

Retrieve signals ──108

Determine parameter Pki used to detect the anomaly ──110

Compute D_max=Max(Si-Th) ──112

Compute and store new Pki value ──114

Compute reconfigured anomaly parameters ──116

Retrieve anomalies for R without « weak result » tag ──118

Apply reconfigured anomaly parameters ──120

Store reconfigured anomaly parameters and apply for next period ──124 Y

Condition 2?

──122

FIG.9

Name *

MAP SRI for SM Failures IMSI minor

Severity *

minor ▼

Threshold type *

Rise ▼

Moving average duration (s) *

600

## Subrule algorithm parameters:

Name parameter *

min_deviation_perc ▼

Value parameter *

1

Name parameter *

min_deviation_val ▼

Value parameter *

2

Name parameter *

tolerance_factor ▼

Value parameter *

1.799922538485396

FIG.10

Europäisches
Patentamt

European
Patent Office

Office européen
des brevets

# EUROPEAN SEARCH REPORT

**Application Number**

EP 25 15 6936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 199 449 A1 (EXFO SOLUTIONS SAS [FR]) 21 June 2023 (2023-06-21) <br> * abstract * <br> * paragraph [0001] - paragraph [0015] * <br> * paragraph [0019] - paragraph [0067] * <br> * figures 1-16 * <br> * claims 1-15 * | 1-18 | INV. <br> H04L41/0631 <br> H04L41/069 <br> H04L41/0893 <br> H04L41/14 <br> H04L43/04 <br> H04L43/08 |
| A | US 2012/137367 A1 (DUPONT LAURENT [US] ET AL) 31 May 2012 (2012-05-31) <br> * abstract * <br> * paragraph [0002] - paragraph [0026] * <br> * paragraph [0150] - paragraph [1418] * <br> * figures 1-121 * <br> * claims 1-49 * | 1-18 | ADD. <br> H04L41/16 <br> H04L43/16 |
| A | EP 3 866 395 A1 (EXFO SOLUTIONS SAS [FR]) 18 August 2021 (2021-08-18) <br> * abstract * <br> * paragraph [0001] - paragraph [0033] * <br> * paragraph [0035] - paragraph [0206] * <br> * figures 1-11 * <br> * claims 1-19 * | 1-18 | |
| | | | TECHNICAL FIELDS SEARCHED (IPC) <br><br> H04L |
| A | US 11 811 588 B2 (SAMSUNG ELECTRONICS CO LTD [KR]) 7 November 2023 (2023-11-07) <br> * abstract * <br> * column 1, line 17 - column 3, line 46 * <br> * column 5, line 6 - column 55, line 43 * <br> * figures 1-24 * <br> * claims 1-20 * | 1-18 | |

The present search report has been drawn up for all claims

| Place of search | Date of completion of the search | Examiner |
|---|---|---|
| Munich | 4 July 2025 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 6936

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2025

| Patent document cited in search report | | Publication date | Patent family member(s) | | Publication date |
|---|---|---|---|---|---|
| EP 4199449 | A1 | 21-06-2023 | EP | 4199449 A1 | 21-06-2023 |
| | | | US | 2023188440 A1 | 15-06-2023 |
| US 2012137367 | A1 | 31-05-2012 | US | 2012137367 A1 | 31-05-2012 |
| | | | US | 2014096249 A1 | 03-04-2014 |
| EP 3866395 | A1 | 18-08-2021 | EP | 3866395 A1 | 18-08-2021 |
| | | | US | 2021250222 A1 | 12-08-2021 |
| US 11811588 | B2 | 07-11-2023 | US | 2021351973 A1 | 11-11-2021 |
| | | | WO | 2021215720 A1 | 28-10-2021 |

EPO FORM P0459

For more details about this annex : see Official Journal of the European Patent Office, No. 12/82

**REFERENCES CITED IN THE DESCRIPTION**

**Patent documents cited in the description**

- US 20230188440 A1
- US 11416504 B2
- US 11522766 B2
- US 11416404 B2
- US 11132109 B2
- US 11522766 B1
- US 20230188400 A1